# EUROPEAN PATENT APPLICATION

(11) **EP 2 348 615 A1**
(43) Date of publication of application: **27.07.2011**
(21) Application number: 10151381.0
(22) Date of filing: 22.01.2010
(51) Int. Cl.: H02K 3/40

(54) **Conductive bar for electric machines**

(71) Applicant: Alstom Technology Ltd, 5400 Baden (CH)
(72) Inventor: Baumann, Thomas, CH-5430, Wettingen (CH); Vannay, Francois, CH-5415, Rieden (CH)

(57) **Abstract**

The conductive bar (1) for electric machines comprises a plurality of interwoven conductive strands (2) insulated from one another and defining two side by side stacks (4). The outer surface of the conductive bar (1) is at least partly uneven.

## Description

### TECHNICAL FIELD

The present invention relates to a conductive bar for electric machines. In particular the present invention refers to rotating electric machines such as large generators with nominal voltage Vₙ>10kV.

### BACKGROUND OF THE INVENTION

Conductive bar for electric machines, such as for example stator bars, are known to comprise conductive copper strands insulated from one another and interwoven to define a conductive bar.

Around this conductive bar a main insulation is then wrapped.

The main insulation is defined by a plurality of layers of a mica tape wrapped around the conductive bar; the mica tape is impregnated with an insulating resin that is cured to realise a stiff electrically insulating main insulation.

The mica tape is made of a mica paper bonded (for example by a bisphenol A/F adhesive) to a backing (for example a glass cloth).

Since the copper constituting the strands of the conductive bar and the mica constituting the mica tape have different physical properties, their behaviour during thermal cycles is different; in this respect most important is the coefficient of thermal expansion CTE.

Due to the differences in coefficient of thermal expansion (CTE) stress generates at the interfaces between the copper strands and the insulation, which may finally lead to delamination of these layers and gap opening. In these gaps partial discharges may occur.

Partial discharges are known to be very detrimental for the lifetime of the main insulation and should be limited.

A further disadvantage of having gaps between copper strands and insulation is that heat transport out of the copper strands is hindered.

### SUMMARY OF THE INVENTION

The technical aim of the present invention is therefore to provide a conductive bar by which the said problems of the known art are eliminated.

Within the scope of this technical aim, an aspect of the invention is to provide a conductive bar by which delamination of the main insulation may be avoided or largely reduced and, thus, also partial discharges are largely reduced.

A further aspect of the invention is to provide a conductive bar that, during operation, have an efficient heat transport out of the copper strands.

The technical aim, together with these and further aspects, are attained according to the invention by providing a conductive bar in accordance with the accompanying claims.

### BRIEF DESCRIPTION OF THE DRAWINGS

Further characteristics and advantages of the invention will be more apparent from the description of preferred but non-exclusive embodiments of the conductive bar for electric machines, illustrated by way of nonlimiting examples in the accompanying drawings, in which:
Figures 1 and 2 respectively show a schematic cross section (figure 1) and a schematic enlarged longitudinal section (figure 2) of a conductive bar in a first embodiment of the invention;
Figures 3, 4 and 5 respectively show a schematic cross section (figure 3), an enlarged view of figure 3 (figure 4) and a schematic enlarged longitudinal section (figure 5) of a conductive bar in a second embodiment of the invention;
Figures 6 and 7 respectively show a schematic cross section (figure 6) of a conductive bar in a third embodiment of the invention and an enlarged view of figure 6 (figure 7); and
Figure 8 shows a schematic longitudinal section of a conductive bar in a further embodiment of the invention.

### DETAILED DESCRIPTION OF THE INVENTION

With reference to the figures, these show a conductive bar generally identified by the reference number 1.

The conductive bar 1 comprises a plurality of interwoven conductive strands 2 insulated from one another by an insulation 3 and defining (in the embodiments shown) two side by side stacks 4; in different embodiments the stacks may also be in a different number, for example four.

The outer surface of the conductive bar 1 is at least partly uneven.

In particular, the uneven surface is defined by protrusions 7 and/or recesses 8.

As shown in the figures, the conductive bar 1 has a substantially rectangular cross section and the protrusions 7 and/or recesses 8 are defined on its short sides 9.

Alternatively, the uneven surface may also be provided on the long sides 10 of the conductive bar 1 or also on both the short and long sides 9, 10.

The protrusions 7 and/or recesses 8 are defined by a covering applied onto the outer surface of the conductive bar 1.

Typically, the covering is defined by a putty 11.

Putty is well known in the art and is traditionally spread onto the short sides of the conductive bar to create an even and uniform layer as basis for the mica tape to be wrapped thereon.

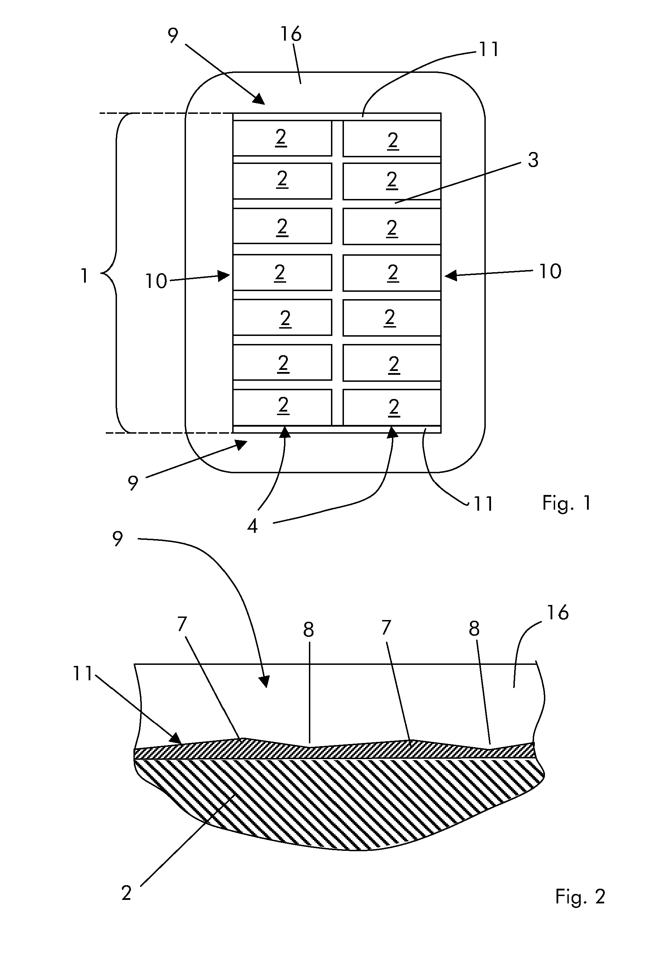

In a first embodiment of the invention (figures 1 and 2) the putty 11 defines a wave-shaped profile.

This particular shape may be achieved by applying the putty 11 onto the conductive bar 1 (for example its short sides 9) and then pressing with a die having the required shape.

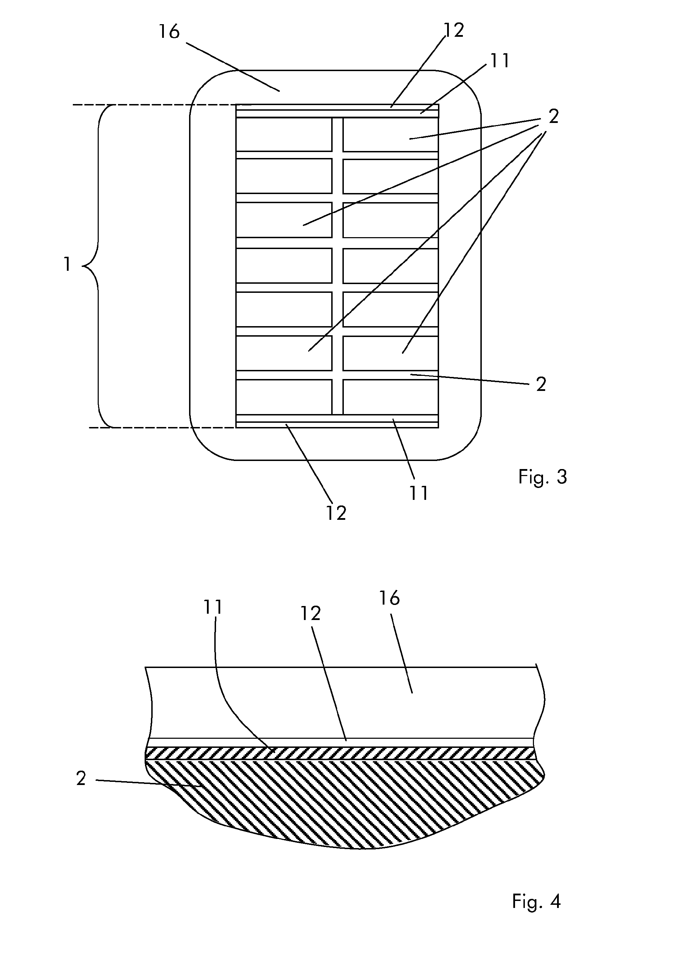

Alternatively (figures 3, 4 and 5) the putty 11 may also define ribs 12 or it can carry ribs 12.

The ribs 12 are perpendicular to a longitudinal axis 14 of the conductive bar 1 and preferably have a triangular cross section.

The triangular cross section has an isosceles triangle and/or a sawtooth shape; in different examples the conductive bar 1 may have only ribs 12 with an isosceles triangle shape 12a or a sawtooth shape with different orientation 12b and 12c or a combination thereof.

In this case, the highest height of the ribs 12 (i.e. the distance from the basis of each rib 12 to its top) is about twice the thickness of the mica tape to be wrapped around the conductive bar 1.

In particular, the highest height of the ribs 12 is less then 1 millimetre and preferably between 0.3-0.7 millimetres.

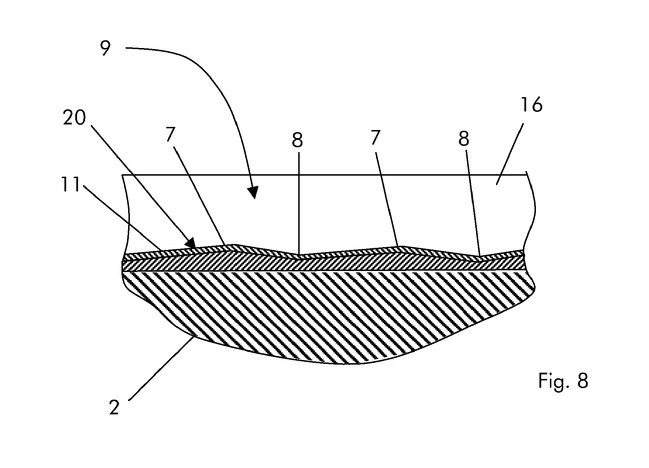

In addition, on top of the putty 11 one or more conductive strips 20 may be provided (figure 8), preferably having a laminated structure.

The conductive strips 20 have a shape reproducing the shape of the putty 11, i.e. the conductive strips 20 lay on the putty 11 and have a continuous contact with the putty 11, such that no voids (i.e. cavities filled with gas or air between the putty 11 and the conductive strips 20) are created.

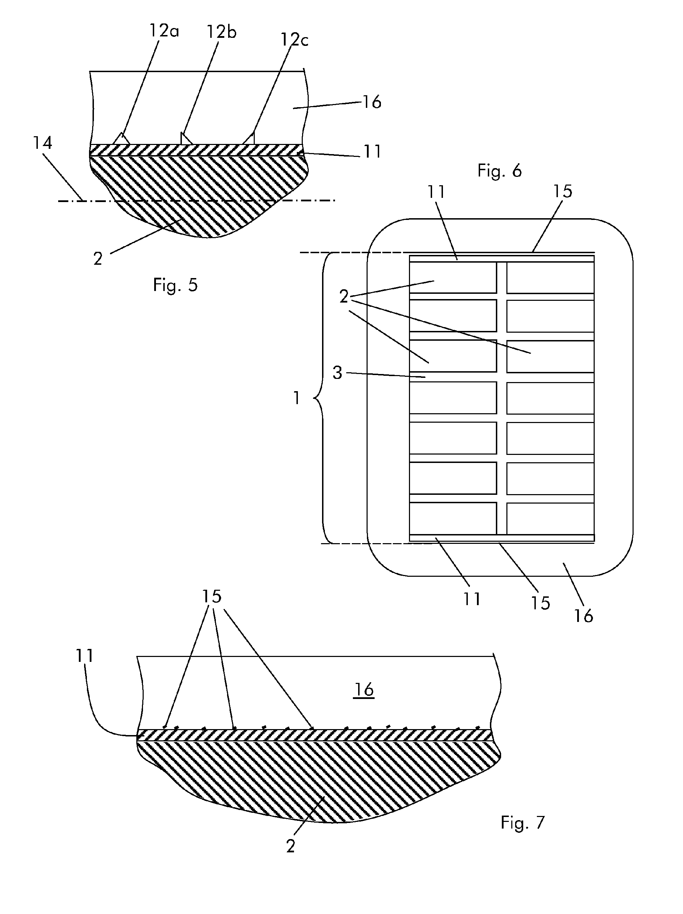

In a further embodiment of the invention (figures 6 and 7), the putty 11 is at least partly covered with a layer of preferably nonconductive grains 15.

These grains 15 are for example sand, glass, corundum and their size is less than 0.5 millimetres and preferably about 0.25-0.45 millimetres.

Around the conductive bar 1 with the putty 11, a mica tape 16 is then wrapped forming one or usually more than one layer; the mica tape 16 is then impregnated with a resin and is cured.

During curing insulation made of mica tape 16 impregnated with the resin is formed and is chemically bonded (via the putty 11) to the conductive bar 1; in addition, the insulation is also mechanically bonded (via the particular profile of the putty and/or thanks to the components contained therein) to the conductive bar 1.

In fact the putty 11 that is applied on the conductive bar 1 withstands the same deformations as the conductive bar 1.

This lets the putty 11 stretch the mica tape 16 (because of the thermal cycles that occur during operation), such that it also withstands the same deformations as the conductive bar 1.

Therefore, since the conductive bar 1 and the mica tape 16 withstand the same (or almost the same) deformations, no delamination occurs.

Naturally the features described may be independently provided from one another.

In practice the materials used and the dimensions can be chosen at will according to requirements and to the state of the art.

### REFERENCE NUMBERS

- 1: conductive bar
- 2: conductive strands
- 3: insulation
- 4: stacks
- 7: projections
- 8: recesses
- 9: short sides of 1
- 10: long sides of 1
- 11: putty
- 12: ribs
- 12a: isosceles triangle shape of 12
- 12b, 12c: sawtooth shape of 12
- 14: axis of 1
- 15: grains
- 16: mica tape
- 20: conductive strip

## Claims

1. Conductive bar (1) for electric machines comprising a plurality of interwoven conductive strands (2) insulated from one another and defining at least two side by side stacks (4), **characterised in that** the outer surface of the conductive bar (1) is at least partly uneven.

2. Conductive bar (1) as claimed in claim 1, **characterised in that** said uneven surface is defined by projections (7) and/or recesses (8).

3. Conductive bar (1) as claimed in claim 2, **characterised in that** said conductive bar (1) has a substantially rectangular cross section, wherein said protrusions (7) and/or recesses (8) are defined on the short sides (9) of the conductive bar (1).

4. Conductive bar (1) as claimed in claim 2, **characterised in that** said projections (7) and/or recesses (8) are defined by a covering applied onto the outer surface of the conductive bar.

5. Conductive bar (1) as claimed in claim 4, **characterised in that** said covering is defined by a putty (11).

6. Conductive bar (1) as claimed in claim 5, **characterised in that** said putty (11) defines a wave-shaped profile.

7. Conductive bar (1) as claimed in claim 5, **characterised in that** said putty (11) defines or carries ribs (12).

8. Conductive bar (1) as claimed in claim 7, **characterised in that** said ribs (12) are perpendicular to the longitudinal axis (14) of the conductive bar (1).

9. Conductive bar (1) as claimed in claim 8, **characterised in that** said ribs (12) have a triangular cross section.

10. Conductive bar (1) as claimed in claim 9, **characterised in that** said triangular cross section has an isosceles triangle (12a) and/or sawtooth (12b, 12c) shape.

11. Conductive bar (1) as claimed in claim 10, **characterised in that** the highest height of said ribs (12) is about twice the thickness of a mica tape (16) to be wrapped around the conductive bar (1).

12. Conductive bar (1) as claimed in claim 5, **characterised in that** said putty is covered by a conductive strip (20) having a shape reproducing the shape of the putty (11).

13. Conductive bar (1) as claimed in claim 12, **characterised in that** said conductive strip (20) has a laminate structure.

14. Conductive bar (1) as claimed in claim 5, **characterised in that** said putty (11) is at least partly covered with a layer of grains (15), said grains being preferably nonconductive grains.

15. Conductive bar (1) as claimed in claim 1, **characterised in that** around said putty (11) an insulation made of a mica tape (16) impregnated with a resin is provided.
